# EUROPEAN PATENT APPLICATION

(11) **EP 4 470 694 A1**
(43) Date of publication of application: **04.12.2024**
(21) Application number: 24174401.0
(22) Date of filing: 06.05.2024
(51) Int. Cl.: B22F 7/08, B22F 10/25, B22F 10/62, B22F 10/64, B33Y 10/00, B33Y 40/20, C23C 24/04, C23C 30/00, B22F 10/43

(54) **SYSTEMS AND METHODS FOR PRODUCING COLD SPRAYED COMPONENTS WITH COATINGS THEREON**

(30) Priority: 30.05.2023 US 202318325774
(71) Applicant: Honeywell International Inc., Charlotte, NC 28202 (US)
(72) Inventor: PIASCIK, James, Charlotte, 28202 (US); DOWNS, John, Charlotte, 28202 (US)
(74) Representative: LKGlobal UK Ltd.

(57) **Abstract**

Systems and methods are provided for forming a coating layer on a cold sprayed component. The systems include a mold including interior surfaces that define a mold cavity, a first deposition apparatus configured to form an initial layer on the interior surfaces of the mold, a second deposition apparatus configured to form a coating layer on the initial layer, a cold spraying additive manufacturing apparatus configured to form a component layer on the coating layer such that contact surfaces between the component layer and the coating layer form a bond in situ, a component removal apparatus configured to separate the initial layer from the mold, and a layer removal apparatus configured to remove the initial layer from the coating layer, wherein the component layer defines a component and the coating layer defines a coating thereon.

## Description

### TECHNICAL FIELD

The present invention generally relates to coating processes, and more particularly relates to a method of forming a coating layer on a cold sprayed component.

### BACKGROUND

Performance enhancing coatings are often formed on surfaces of components by electrochemical plating processes. Electrochemical plating, also known as electroplating, are processes that involves forming a metal coating on a conductive surface using an electrical current. Performance enhancing coatings applied by electrochemical plating processes may provide, for example, improved corrosion resistance, wear resistance, or thermal resistance.

However, certain materials, such as those that naturally passivate readily, can be difficult to coat by electrochemical plating processes. For example, aluminum naturally forms an oxide layer thereon that may interfere with the electrochemical plating process. In particular, it can be quite challenging to obtain a strong bond between the aluminum surface and the coating layer, and to achieve a smooth exterior surface on the resulting coating.

Hence, there is a need for methods of coating components, such as those that passivate readily, that are capable of providing strong interlayer bonds. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided that includes forming an initial layer on a mold, forming a coating layer on the initial layer, forming a component layer on the coating layer by a cold spraying additive manufacturing process, wherein contact surfaces between the component layer and the coating layer form a bond in situ, separating the initial layer from the mold, and removing the initial layer from the coating layer, wherein the component layer defines a component and the coating layer defines a coating thereon.

A system is provided that includes a mold including interior surfaces that define a mold cavity, a first deposition apparatus configured to form an initial layer on the interior surfaces of the mold, a second deposition apparatus configured to form a coating layer on the initial layer, a cold spraying additive manufacturing apparatus configured to form a component layer on the coating layer such that contact surfaces between the component layer and the coating layer form a bond in situ, a component removal apparatus configured to separate the initial layer from the mold, and a layer removal apparatus configured to remove the initial layer from the coating layer, wherein the component layer defines a component and the coating layer defines a coating thereon.

Furthermore, other desirable features and characteristics of the system and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a flowchart illustrating an exemplary method for producing a component with a coating layer thereon in accordance with an embodiment;
FIGS. 2-7 schematically represent layers formed at various steps of the method of FIG. 1 in accordance with various embodiments;
FIG. 8 schematically represents a perspective view a heat exchanger with a cut-away portion showing an array of tubes in accordance with an embodiment;
FIG. 9 schematically represents a cross-sectional view of an individual tube of the heat exchanger of FIG. 8 produced by the method of FIG. 1 in accordance with an embodiment; and
FIG. 10 is a block diagram that schematically represents a system for producing a component with a coating layer thereon in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Systems and methods disclosed herein provide for forming one or more coating layers on surfaces of components. The systems and methods are particularly suitable for overcoming challenges associated with forming coating layers on naturally passivating materials via electrochemical plating processes. In general, the systems and methods include forming at least one coating layer within a mold, and then forming the component on the coating layer by a cold spraying additive manufacturing process (also referred to as a cold spraying process). Although not required, in some embodiments, the coating layer(s) may be formed by an electrochemical plating process, and therefore, may provide various benefits of the electrochemical plating process while simultaneously avoiding or reducing certain challenges associated therewith, as described in more detail herein.

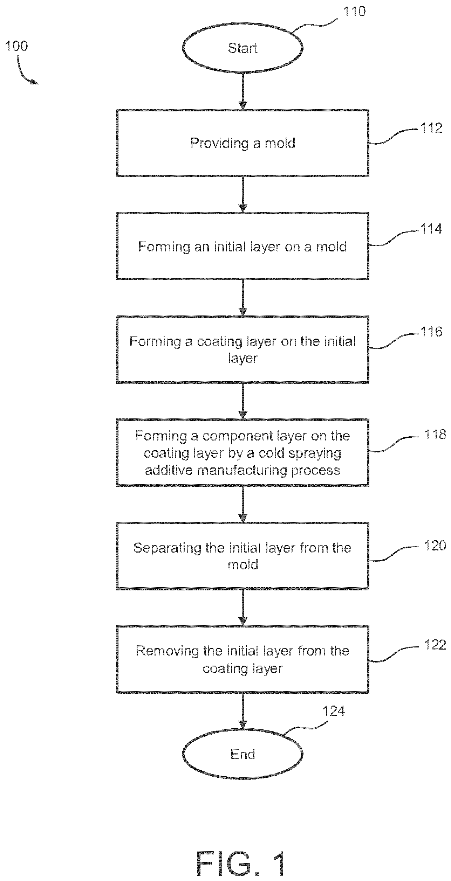

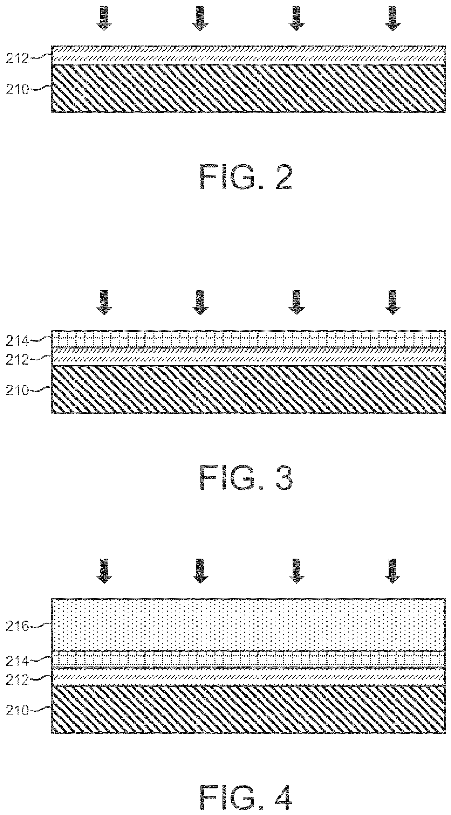

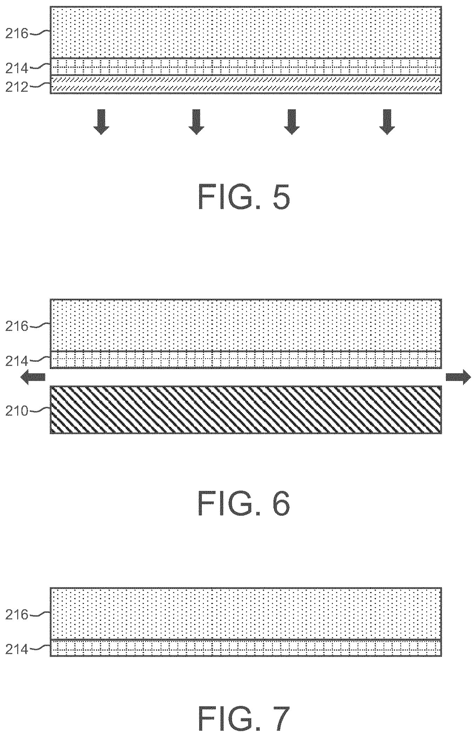

FIG. 1 presents an exemplary method 100 for producing a component having a coating thereon. FIGS. 2-7 represent nonlimiting examples of various stages of the method 100. Specifically, FIGS. 2-4 represent various steps in forming certain layers of the component, FIGS. 5-6 represents various steps in removing the component from the mold and/or removing certain layers from the component, and FIG. 7 represents an isolated view of a resulting component produced by the method 100. For convenience, layers produced by the method 100 will be referred to hereinafter by reference numbers shown in FIGS. 2-7; however, it should be understood that the various stages and layers represented in FIGS. 2-7 are merely exemplary and the method 100 is not limited thereto.

Referring initially to FIG. 1, the method 100 may start at 110. At 112, the method 100 may include providing a mold 210. The mold 210 may have a mold cavity having various shapes and sizes. In some embodiments, the mold 210 may have a mold cavity that is configured to produce a substantially tubular component having, for example, a circular cross-section or faceted cross-section (e.g., rectangular, hexagonal, octagonal, etc.). The mold 210 may be formed of various materials. In some embodiments, the mold 210 (or exposed surfaces within the mold cavity) may be formed of a material having a relatively low coefficient of thermal expansion (CTE), for example, below 5.0 ×10⁻⁶K⁻¹, such as below 2.0 ×10⁻⁶K⁻¹, such as below 1.0 ×10⁻⁶K⁻¹. In some embodiments, the mold 210 may be formed of a nickel-iron alloy, such as Invar (FeNise).

At 114, the method 100 may include forming an initial layer 212 on the mold 210, as represented in FIG. 2. In various embodiments, the initial layer 212 may be a sacrificial or release layer configured to promote removal of the component from the mold 210 upon completion of the production of the component. In some embodiments, the initial layer 212 may be configured to promote a smooth surface texture of a subsequently form layer. In some embodiments, the initial layer 212 may be configured to promote ease of removal thereof from underlying layers (e.g., a coating layer 214 discussed below)

The initial layer 212 may be formed by various processes including, but not limited to, certain electrochemical plating processes, electroless plating processes, vacuum deposition processes (e.g., evaporation, sputtering, etc.), chemical vapor deposition processes, and thermal spraying processes. The initial layer 212 may be formed of various materials selected based on the intended function(s) of the initial layer 212 (e.g., releasability from the mold 210, surface roughness of a subsequent layer, removability from a subsequent layer, etc.). In some embodiments, the initial layer 212 may be formed of a material having a high CTE relative to the mold 210 (or exposed surfaces within the mold cavity) to promote release of the initial layer 212 therefrom. In some embodiments, the initial layer 212 may be formed of a material that may be selectively etched. In some embodiments, the initial layer 212 may be formed of a metallic material, such as copper, copper alloys, zinc, or zinc alloys. In some embodiments, the initial layer 212 may be formed of a material having a low melting temperature relative to the mold 210 and other layers of the component. In some embodiments, the initial layer 212 may be formed of a tin-lead (Sn/Pb) alloy. In some embodiments, the initial layer 212 may be formed of a natural or synthetic wax material.

At 116, the method 100 may include forming a coating layer 214 on the initial layer 212, as represented in FIG. 3. In various embodiments, the coating layer 214 may be a performance enhancing layer configured to modify one or more operational properties of the component. In some embodiments, the coating layer 214 may be configured to promote corrosion resistance, wear resistance, oxidation resistance, thermal resistance, and/or structural integrity of exterior surface of the component.

The coating layer 214 may be formed by various processes including, but not limited to, certain electrochemical plating processes, electroless plating processes, vacuum deposition processes (e.g., evaporation, sputtering, etc.), chemical vapor deposition processes, and thermal spraying processes. The coating layer 214 may be formed of various materials selected based on the intended functionality thereof (e.g., wear resistance, corrosion resistance, thermal resistance, etc.). In some embodiments, the coating layer 214 may be formed of a metallic material, such as nickel, nickel alloys, chromium, chromium alloys, cobalt, or cobalt alloys. In some embodiments, the coating layer 214 may be formed of a nickel-tungsten alloy, a nickel-phosphorus alloy, a cobalt-phosphorus alloy, or a cobalt-nickel alloy. In some embodiments, the coating layer 214 may be formed of a ceramic material, such as certain oxides, carbides, or nitrides. In some embodiments, the coating layer 214 has a thickness of between about 50 micrometers (µm) and 500 µm, such as about 250 µm to 500 µm, such as greater than 500 µm.

At 118, the method 100 may include forming a component layer 216 on the coating layer 214 by a cold spraying additive manufacturing process, as represented in FIG. 4. In some embodiments, the component layer 216 may include the bulk of the component, for example, defining greater than 90 weight percent (wt.%) of the component, such as greater than 95 wt.%, such as greater than 98 wt.%.

The cold spraying process may include various steps. In some embodiments, the cold spraying process involves depositing material onto the coating layer 214 (or a layer therebetween) by accelerating powder particles to supersonic speeds using a high-pressure gas. More specifically, the cold spraying process may include providing a powder material having to a particle size suitable for cold spraying. Optionally, the powder material may be treated with a surfactant or other additives to improve various properties thereof such as flow and/or adhesion properties. A high-pressure gas, such as nitrogen or helium, may be compressed to an operating pressure (e.g., several hundred bar) and heated to an operating temperature (e.g., several hundred degrees Celsius). The gas may be directed as a stream through a nozzle assembly (e.g., a converging-diverging nozzle) which accelerates the gas and produces a low-pressure region at an outlet of the nozzle assembly. The powdered material may be injected into the stream of the gas wherein the powder material is accelerated and heated by the gas. In various embodiments, the powder material is heated to a temperature below a melting point thereof (i.e., the powder material does not melt).

The powder material within the stream of the gas is directed by the nozzle assembly to impact and adhere to the coating layer 214 (or a layer therebetween). The nozzle assembly and/or the mold 210 may be moved while spraying the powder material to form a dense and cohesive coating. The above-described process may be repeated to build up a desired shape or structure of the component layer-by-layer. In various embodiments, contact surfaces between the component layer 216 and the coating layer 214 (or a layer therebetween) form a bond in situ. The operating parameters of the cold spraying process may vary depending, for example, on the materials used and the desired shape and/or structure of the component. Nonlimiting examples of cold spraying processes and parameters thereof are disclosed in U.S. Patent No. 11,415,380 to Chipko et al., incorporated herein by reference in its entirety, that may be suitable for some embodiments herein.

The component layer 216 may be formed of various materials. In some embodiments, the component layer 216 is formed of a metallic materials such as titanium, titanium alloys, aluminum, aluminum alloys, magnesium, or magnesium alloys. In some embodiments, the component layer 216 is formed of a non-equilibrium alloy (e.g., AA2009). As used herein, a non-equilibrium alloy refers to an alloy that is not in thermodynamic equilibrium at room temperature and atmospheric pressure, and has a non-uniform distribution of atoms or molecules. These alloys may be produced using rapid solidification techniques, such as quenching or rapid cooling from a molten state, which prevent the material from reaching an equilibrium state and result in a metastable microstructure. Nonlimiting examples of non-equilibrium alloys include metallic glasses, which are alloys with an amorphous (non-crystalline) structure, and nanocrystalline alloys, which have a fine-grained structure with grain sizes in the nanometer range.

At 120, the method 100 may include separating the initial layer 212 from the mold 210. The initial layer 212 may be removed from the mold 210 by various methods. At 122, the method 100 may include removing the initial layer 212 from the coating layer 214. The initial layer 212 may be removed from the coating layer 214 by various methods.

In some embodiments, separating the initial layer 212 from the mold 210 (at 120), and removing the initial layer 212 from the coating layer 214 (at 122) may be performed separately. In such embodiments, the initial layer 212 may be present on the coating layer 214 subsequent to separation of the initial layer 212 from the mold 210, as represented in FIG. 5. As nonlimiting examples, separating the initial layer 212 from the mold 210 may be performed by a mechanical release process wherein a force is applied to the component relative to the mold 210 that is sufficient to cause separation due to mechanical failure of the initial layer 212, or performed by a thermal cycling process wherein a temperature of the mold 210 and/or component is increased or decreased in a manner that causes separation due to a mismatch of CTE between the mold 210 and the initial layer 212 (or other layers).

The initial coating may then be removed from the coating layer 214 by, for example, a selective etching process wherein an etchant is applied to selectively remove the initial layer 212 while preserving the coating layer 214 and the component layer 216 or a melting process wherein a temperature of the initial layer 212 is increased above a melting point thereof such that the initial layer 212 melts and flows from the exposed surfaces of the mold cavity. As a first nonlimiting example, nitric acid (e.g., concentration of 50 wt.%) may be applied to selectively etch a layer of copper or alloy thereof while preserving an underlying layer of aluminum or alloy thereof(e.g., alloy AA8009). As other nonlimiting examples, ammoniacal ammonium chloride may be applied to selectively etch a layer of copper or alloy thereof while preserving an underlying layer of nickel or alloy thereof, cobalt or alloy thereof, or chrome or alloy thereof.

In some embodiments, separating the initial layer 212 from the mold 210 (at 120), and removing the initial layer 212 from the coating layer 214 (at 122) may be performed simultaneously. As nonlimiting examples, removing the initial layer 212 from the mold 210 and removing the initial layer 212 from the coating layer 214 may be performed simultaneously within the mold cavity by a selective etching process or a melting process, wherein the initial layer 212 is selectively removed from between the mold 210 and the coating layer 214, as represented in FIG. 6.

For embodiments in which the component layer 216 includes a non-equilibrium alloy, the steps of forming the component layer 216 (at 118), separating the initial layer 212 (at 120), and removing the initial layer 212 (at 122) are performed at temperatures below a crystallization temperature of the non-equilibrium alloy.

In some embodiments, separating the initial layer 212 from the coating layer 214 results in the coating layer 214 having a relatively smooth surface roughness, such as having an arithmetic average (Ra) of surface heights measured across the surface thereof of less than 0.254 micrometers (mm), such as between about 0.0254 mm and 0.254 mm.

In some embodiments, separating the initial layer 212 from the coating layer 214 results in a final component defined by the component layer 216, the coating layer 214, and optionally, any layers therebetween. In some embodiments, separating the initial layer 212 from the coating layer 214 results in an intermediate component defined by the component layer 216, the coating layer 214, and optionally, any layers therebetween, and various post-processing steps may be performed on the intermediate component to produce a final component. The method 100 may end at 124.

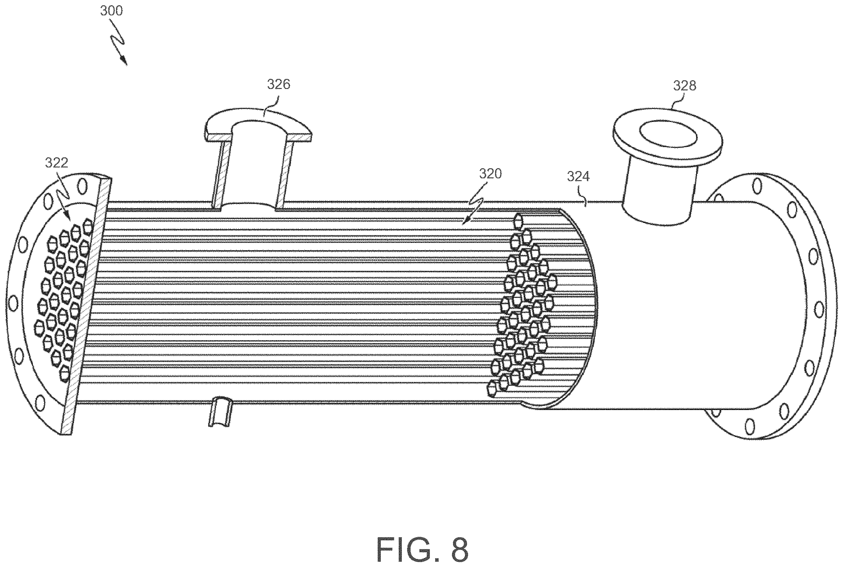

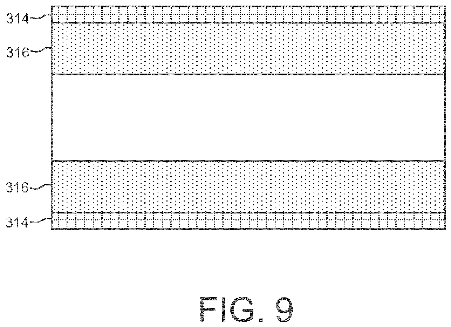

The method 100 may be used to produce various components having various shapes, structures, and compositions. As a specific but nonlimiting example, FIGS. 8 and 9 represent an application wherein the method 100 is used to produce components of a heat exchanger 300. Referring to FIG. 8, an array of tubes 320 is joined to header structure 322. In this particular example, the header structure 322 assumes the form of a manifold plate or tube sheet. In this particular example, the heat exchanger 300 is a shell-and-tube heat exchange and includes a shell 324 having an inlet 326 and an outlet 328 through which a liquid or gaseous coolant may be conducted during heat exchanger operation. Concurrently, the temperature-regulated fluid is conducted from header structure 322, through array of tubes 320, and to another header structure (hidden from view in FIG. 8) before discharge from the heat exchanger 300. Heat is thus removed from the temperature-regulated fluid, thermally conducted through the walls of individual tubes in the array of tubes 320, and ultimately transferred to the coolant fluid circulated through shell 324 and impinging upon the exteriors of the individual tubes forming array of tubes 320. In alternative embodiments, other types of fluid can be circulated through the heat exchanger 300 or the above-described thermal transfer relationship can be reversed such that the temperature-regulated fluid is heated as the fluid passes through heat exchanger 300. FIG. 9 presents an isolated cross-sectional view of a portion of one of the individual tubes of the array of tubes 320. In this example, the tube includes a component layer 316 having a coating layer 314 formed thereon, for example, by the method 100.

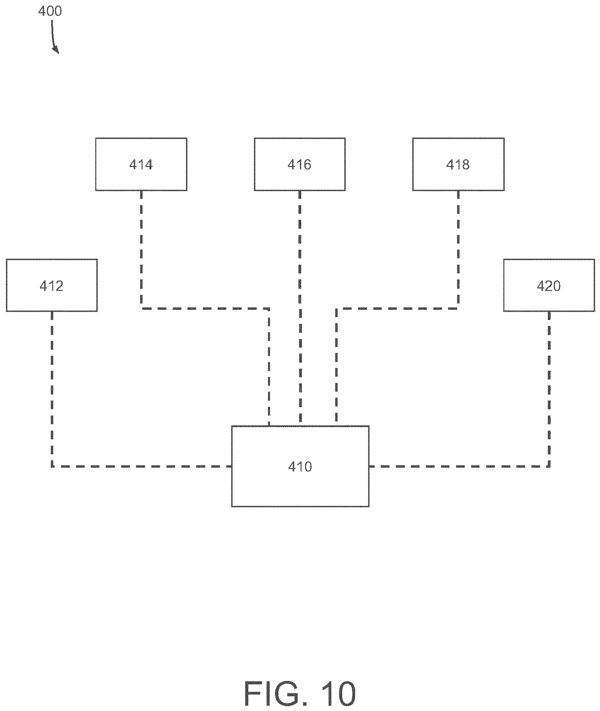

Referring to FIG. 10, a block diagram is presented that schematically represents a system 400 configured to produce a component having a coating thereon, for example, by the method 100. The system 400 includes a mold 410 having interior surfaces that define a mold cavity, a first deposition apparatus 412 configured to form an initial layer on the interior surfaces of the mold 410, a second deposition apparatus 414 configured to form a coating layer on the initial layer, a cold spray additive manufacturing apparatus configured to form a component layer on the coating layer via a cold spraying process, a first apparatus 418 configured to remove the initial layer from the interior surfaces of the mold 410, and a second apparatus configured to remove the initial layer from the coating layer.

In various embodiments, the first deposition apparatus 412 and/or the second apparatus device 414 may be configured to perform electrochemical plating processes, electroless plating processes, vacuum deposition processes (e.g., evaporation, sputtering, etc.), chemical vapor deposition processes, and thermal spraying processes. In various embodiments, the first deposition apparatus 412 and the second deposition apparatus 414 may be a single deposition apparatus.

The cold spraying additive manufacturing apparatus 416 may be any cold spraying apparatus capable of forming the component layer on the coating layer via a cold spraying process as described herein.

In various embodiments, the first apparatus 418 may be any apparatus capable of removing the initial layer from the interior surfaces of the mold 410. In various embodiments, the first apparatus 418 may be any apparatus configured to perform a mechanical release process wherein a force is applied to the component relative to the mold 410 that is sufficient to cause separation due to mechanical failure of the initial layer. In various embodiments, the first apparatus 418 may be any apparatus configured to perform a thermal cycling process wherein a temperature of the mold 410 is increased or decreased in a manner that causes separation due to a mismatch of CTE between the mold 410 and the initial layer. In various embodiments, the first apparatus 418 may be any apparatus configured to perform an etching process wherein an etchant is applied to selectively remove the initial layer while preserving the coating layer and the component layer. In various embodiments, the first apparatus 418 may be any apparatus configured to perform a melting process wherein a temperature of the initial layer is increased above a melting point thereof such that the initial layer melts and flows from the exposed surfaces of the mold cavity.

In various embodiments, the second apparatus 420 may be any apparatus capable of removing the initial layer from the coating layer. In various embodiments, the second apparatus 420 may be any apparatus configured to perform an etching process wherein an etchant is applied to selectively remove the initial layer while preserving the coating layer and the component layer. In various embodiments, the second apparatus 420 may be any apparatus configured to perform a melting process wherein a temperature of the initial layer is increased above a melting point thereof such that the initial layer melts and flows from the coating layer. In various embodiments, the first apparatus 418 and the second apparatus 420 may be a single apparatus.

The systems and methods disclosed herein provide various benefits over certain existing systems and methods. For example, it can be quite challenging to obtain a strong interlayer bond and to achieve a smooth exterior surface on the resulting coating when working with workpieces formed of certain materials, such as those that naturally passivate easily. The systems and methods disclosed herein address these issues by forming a coating layer within a mold and then forming a component layer on the coating layer by a cold spraying additive manufacturing process. In this manner, contact surfaces between the component layer and the coating layer form a bond in situ and the coating layer has a relatively smooth exterior surface.

In addition, for layers deposited via electrochemical plating processes, surface roughness increases with increasing layer thickness. Typically, this requires a post-processing process, such as a grinding process, to be performs to obtain a relatively smooth surface. The systems and methods disclosed herein form the initial layer 212 on the mold 210 and the coating layer 214 on the initial layer 212. As such, the final exterior layer of the coating layer 214 will be influenced by the mold 210 and can be relatively smooth (e.g., Ra of less than 0.254 micrometers). Further, the surfaces of the coating layer 214 in contact with the component layer 216 have a surface roughness dictated by the electrochemical plating process, and therefore are relatively rough (e.g., Ra of greater than 0.254 micrometers). This rough interior surface of the coating layer 214 promotes adhesion with the cold sprayed component layer 216.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method, comprising:
forming an initial layer on a mold;
forming a coating layer on the initial layer;
forming a component layer on the coating layer by a cold spraying additive manufacturing process, wherein contact surfaces between the component layer and the coating layer form a bond in situ;
separating the initial layer from the mold; and
removing the initial layer from the coating layer, wherein the component layer defines a component and the coating layer defines a coating thereon.

2. The method of claim 1, wherein:
separating the initial layer from the mold is performed by a mechanical release process, and removing the initial layer from the coating layer is performed by a selective etching process or a melting process;
separating the initial layer from the mold is performed by a thermal cycling process, and removing the initial layer from the coating layer is performed by a selective etching process or a melting process;
separating the initial layer from the mold and removing the initial layer from the coating layer are simultaneously performed by a selective etching process; or
separating the initial layer from the mold and removing the initial layer from the coating layer are simultaneously performed by a melting process.

3. The method of claim 1, wherein removing the initial layer from the coating layer results in a surface of the coating layer having an arithmetic average (Ra) of surface heights measured across the surface of less than 0.254 micrometers.

4. The method of claim 1, wherein the initial layer is copper or an alloy thereof, wherein the coating layer is nickel or alloy thereof, cobalt or alloy thereof, a carbide, or a nitride, wherein the component layer is titanium, aluminum, magnesium, or alloys thereof.

5. The method of claim 1, wherein the component layer is a non-equilibrium alloy, wherein forming the component layer, separating the initial layer from the mold, and removing the initial layer from the coating layer are performed at temperatures below a crystallization temperature of the non-equilibrium alloy.

6. A system, comprising:
a mold including interior surfaces that define a mold cavity;
a first deposition apparatus configured to form an initial layer on the interior surfaces of the mold;
a second deposition apparatus configured to form a coating layer on the initial layer;
a cold spraying additive manufacturing apparatus configured to form a component layer on the coating layer such that contact surfaces between the component layer and the coating layer form a bond in situ;
a component removal apparatus configured to separate the initial layer from the mold; and
a layer removal apparatus configured to remove the initial layer from the coating layer, wherein the component layer defines a component and the coating layer defines a coating thereon.

7. The system of claim 6, wherein:
the component removal apparatus is configured to perform a mechanical release process, and the layer removal apparatus is configured to perform a selective etching process or a melting process;
the component removal apparatus is configured to perform a thermal cycling process, and the layer removal apparatus is configured to perform a selective etching process or a melting process;
the component removal apparatus and the layer removal apparatus are defined by a single selective etching apparatus configured to perform a selective etching process within the mold; or
the component removal apparatus and the layer removal apparatus are defined by a single heat treatment apparatus configured to perform a melting process within the mold.

8. The system of claim 6, wherein the layer removal apparatus is configured to provide a surface of the coating layer with an arithmetic average (Ra) of surface heights measured across the surface of less than 0.254 micrometers.

9. The system of claim 6, wherein the initial layer is copper or an alloy thereof, wherein the coating layer is nickel or alloy thereof, cobalt or alloy thereof, a carbide, or a nitride, wherein the component layer is titanium, aluminum, magnesium, or alloys thereof.

10. The system of claim 6, wherein the component layer is a non-equilibrium alloy and the cold spraying additive manufacturing apparatus, the component removal apparatus, and the layer removal apparatus are each configured to operate at temperatures below a crystallization temperature of the non-equilibrium alloy.
